# EUROPEAN PATENT SPECIFICATION

(11) **EP 3 964 106 B1**
(45) Date of publication and mention of the grant of the patent: **12.07.2023**
(21) Application number: 21187859.0
(22) Date of filing: 27.07.2021
(51) Int. Cl.: A47J 36/32

(54) **INDUCTIVELY POWERED KITCHEN APPLIANCE AND CONTROL METHOD THEREOF**
INDUKTIV BETRIEBENES KÜCHENGERÄT UND STEUERUNGSVERFAHREN DAFÜR
APPAREIL DE CUISINE ALIMENTÉ PAR INDUCTION ET SON PROCÉDÉ DE COMMANDE

(30) Priority: 20.08.2020 TR 202013193
(43) Date of publication of application: 09.03.2022
(73) Proprietor: Arçelik Anonim Sirketi, 34445 Istanbul (TR)
(72) Inventor: SINIRLIOGLU, Sercan, 34445 ISTANBUL (TR); POLAT, Akif Hakki, 34445 ISTANBUL (TR); SEZER, Canberk, 34445 ISTANBUL (TR); AVCI, Cem, 34445 Istanbul (TR); KALA, Bilent, 34445 ISTANBUL (TR)

(56) References cited:
- WO-A1-2014/016032
- WO-A1-2018/183574
- US-A1- 2018 255 975

## Description

The present invention relates to an inductively powered kitchen appliance and a control method of the kitchen appliance.

Inductively powered cordless kitchen appliances work in connection with an inductive power source placed underneath a surface on which the kitchen appliance is placed. The power source comprises a primary coil for transmitting power to a secondary coil comprised in the cordless appliance. When selected power is adjusted on the appliance via user input means, power provided from the power source to an operating element of the kitchen appliance, such as a resistant heater of a kettle or an electric motor of a mixer, is adjusted accordingly.

The power source and the appliance also include communication means for wireless connection therebetween, by means of which device information and desired power parameters can be transmitted to the power source. Inductively transferred power is used in the kitchen appliance to energize the communication means thereof, as well as electronic circuits and a control unit for controlling these components. In order to couple the kitchen appliance to the power source, initially a certain amount of power is transferred from the power source for activating the wireless communication means of the appliance. The initial energy may lead to unintentional activation of another operating element of the kitchen appliance, such as rotation of a blade or heating of a resistant element. This creates a risk both for the user and the device, because unexpected activation of an element in the kitchen appliance can cause injuries as well as damage to components of the appliance.

In the state of the art, United States Patent application US3761668A discloses cordless kitchen appliances powered by induction surface cooking units. The control of the appliances is realized by control knobs of the cooking unit and user controlled switches on appliances.

International patent application WO2017118379A1 discloses an apparatus for preparing food and a method for controlling the same. The apparatus comprises a base comprising a motor and a vessel for holding food, wherein the motor is automatically shut down when the vessel is removed from the base. WO 2014/016032 is the prior art closest to the invention and discloses the preamble of claim 1.

The aim of the present invention is the realization of an inductively powered kitchen appliance and a control method thereof with improved safety. Another purpose of the invention is to provide a cordless kitchen appliance wherein unintentional operation is prevented. A further purpose of the invention is realization of a cordless kitchen appliance which can be accurately controlled from the device side. It is aimed with the present invention, therefore, to provide an inductively powered kitchen appliance wherein potential damage to the appliance and possible harm to users of the device are prevented in a simple, reliable, and cost-effective manner.

The inductively powered kitchen appliance realized in order to attain the aim of the present invention, explicated in Claim 1 and the respective claims thereof, comprises a secondary coil for receiving electrical power from a primary coil of an inductive power source, a wireless communication module for wirelessly communicating with a communication unit of the inductive power source, a control unit, input means for receiving user input, and a food processing element for processing food placed in the kitchen appliance.

The kitchen appliance further comprises a relay for controlling provision of power to the food processing element, and the control unit is configured to control the relay. In this way, provision of power to the food processing element can be controlled separately from provision of power to the wireless communication module and other components of the appliance. Said separate power control is realized without using an additional secondary coil or a second power circuit.

The relay is a normally open relay. In other words, when no control signal is applied to the relay, the relay is in a non-conducting (open) state. When the relay is closed, it is in conducting state and allows current to flow through.

The control unit is configured to close the relay when a predetermined condition is realized. As a result, it is ensured that the food processing element is energized in a controlled manner, more particularly only when control unit determines that a predetermined criteria is met. Said predetermined condition comprises at least one of: establishing a connection between the wireless communication module and the communication unit of the inductive power source, sending limit information of the kitchen appliance to the inductive power source, and receiving user input via input means for operating the kitchen appliance. In this way, any uncontrolled and immediate operation of the kitchen appliance, and especially that of the food processing unit, is prevented by a simple yet effective power control. By waiting for sending the limit information before closing the relay, over- or under-powering of appliance and therefore any possible malfunctioning thereof is prevented. Owing to closing the relay only when a user input is received, unintentional operation of the food processing unit, such as involuntary rotation of a motor or heating of a resistive element is prevented, improving user safety and proper functioning of the appliance.

According to an embodiment of the invention, the control unit is further configured to, during operation of the food processing element, open the relay when the control unit detects that the connection between the wireless communication module and the communication unit of the inductive power source is broken and/or a power off command is received via the input means. Accordingly, it is ensured that the food processing element operates as long as safe and reliable connection with the inductive power source is maintained. Unintentional extended operation, e.g. rotation or heating, of the food processing unit is prevented by immediately stopping power provision to the food processing unit when proper wireless communication between the appliance and the power source is lost, or when a user wants to stop operating the appliance.

The food processing element can be a motorized element. Accordingly, the cordless kitchen appliance can be a mixer, a blender, a chopper, etc.

The food processing element can be a resistive element. Accordingly, the cordless kitchen appliance can be a kettle, a coffee machine, a toaster, etc.

According to another aspect of the invention, there is provided a method of controlling the inductively powered kitchen appliance. The method comprises receiving energy from an inductive power source, establishing wireless connection between a communication unit of the inductive power source and the wireless communication module, sending via the wireless connection limit information from the kitchen appliance to the inductive power source, and receiving user input via input The method further comprises controlling provision of power to the food processing element by means of a normally open relay controlled by the control unit. The method further comprises closing the relay only when the control unit detects that a predetermined condition is realized. Said predetermined condition can comprise at least one of: establishing a connection between the wireless communication module and the communication unit of the inductive power source, sending limit information of the kitchen appliance to the inductive power source, and receiving user input via input means for operating the kitchen appliance

The method may further comprise checking, during operation of the food processing element, status of the connection between the wireless communication module and the communication unit of the inductive power source, and opening the relay if it is detected that said wireless communication is broken. Additionally, or alternatively, the method may comprise checking, during operation of the food processing element, if a power off command is received via the input means and opening the relay when a power off command is received.

The inductively powered kitchen appliance and the method of controlling the inductively powered kitchen appliance realized in order to attain the aim of the present invention is illustrated in the attached figures, where:
Figure 1 is a schematic diagram of an inductively powered kitchen appliance according to an embodiment of the invention,
Figure 2 is a flow diagram of the method of controlling the kitchen appliance according to an embodiment of the invention.

The elements illustrated in the figures are numbered as follows:
1. Kitchen appliance
2. Secondary coil
3. Wireless communication module
4. Control unit
5. Input means
6. Food processing element
7. Relay

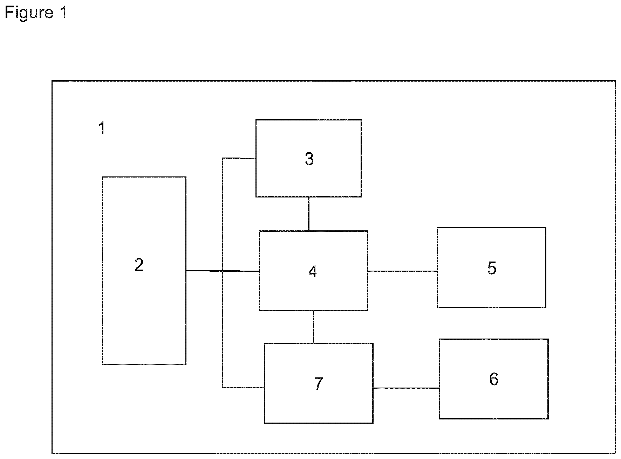

The kitchen appliance (1) comprises a secondary coil (2) for receiving electrical power from a primary coil of an inductive power source, a wireless communication module (3) for wirelessly communicating with a communication unit of the inductive power source, a control unit (4), input means (5) for receiving user input, and a food processing element (6) for processing food placed in the kitchen appliance (1). (Figure 1)

In a preferred embodiment, the kitchen appliance (1) further comprises a relay (7) for controlling provision of power to the food processing element (6). The control unit (4) is configured to control the relay (7).

Inductive power source may be an inductive cooktop, or a worktop surface furnished with primary coil and other electrical components required to operate in combination with cordless devices suitable for being powered inductively. The wireless communication module (3), the control unit (4), the input means (5), the food processing element (6) and other components of the kitchen appliance (1), such as other electronic circuits and sensors (not shown) are preferably energized by power transferred from the inductive power source.

Wireless communication between the kitchen appliance (1) and the power source may be based on any known short-range wireless communication standard, such as Bluetooth. The wireless communication module (3) is for example a Bluetooth Low Energy (BLE) module.

The control unit (4) preferably comprises a programmable microcontroller.

Input means (5) may comprise one or more hard or soft keys, buttons, and/or knobs, and preferably a user interface disposed on the device and/or on an external device (e.g. a smart phone) which may be connected to the kitchen appliance (1).

The food processing element (6) comprises parts for processing food in accordance with function of the kitchen appliance (1). Said parts can comprise means for cutting, chopping, mixing, heating, etc. solid or liquid food.

In at least one embodiment, the relay (7) is disposed on power input of the food processing element (6). When the kitchen appliance (1) is being energized, the relay (7) in its closed (i.e. conducting) state allows powering the food processing element (6). When the relay (7) is in open (i.e. non-conducting) state, however, it acts as open circuit between its terminals and hence cuts power to the food processing element (6). In preferred embodiments, the relay (7) is a normally open relay, not allowing power transmission unless it is closed by a control signal from the control unit (4).

The control unit (4) can be further configured to keep the relay (7) open until the control unit (4) detects that a predetermined condition is realized and close the relay (7) only when at least one predetermined condition is realized. For this purpose, the control unit (4) is configured to monitor the components of kitchen appliance (1) in order to decide whether said at least one predetermined condition is met. The predetermined condition may relate to data communicated between the kitchen appliance (1) and inductive power source, an electrical state of the kitchen appliance (1) sensed by a sensor therein, such as overheating or overcurrent.

The predetermined condition may comprise one or more of the following: establishing a connection between the wireless communication module (3) and the communication unit of the inductive power source, sending limit information indicating electrical operating limits of the kitchen appliance (1) to the inductive power source, and receiving a user input via input means (5) for operating the kitchen appliance (1) by activating the food processing element (6). Accordingly, the control unit (4) may be configured to continuously and/or periodically monitor and detect whether the wireless communication module (3) is connected to the communication unit of the power source, whether limit information is successfully sent to the power source, or whether a user input for operating the food processing element (6) is received.

According to an embodiment of the invention, the control unit (4) is further configured to open the relay (7) when the control unit (4) detects that the connection between the wireless communication module (3) and the communication unit of the inductive power source is broken and/or a power off command is received via the input means (5) during operation of the food processing element (6).

Specific configuration of power circuitry and components of the kitchen appliance (1) may vary across different types of kitchen appliances, as known to any person skilled in the field. While some food processing elements (6) operate with DC power, others operate with AC power. Accordingly, the kitchen appliance (1) may be a mixer, blender, chopper, etc. wherein the food processing element (6) is a motorized element. The kitchen appliance (1) may also be a kettle, coffee machine, toaster, etc. wherein the food processing element (6) is a resistive element.

The method of controlling the inductively powered kitchen appliance (1) comprises receiving (101) energy from an inductive power source, establishing (102) wireless connection between a communication unit of the inductive power source and the wireless communication module (3), sending (103) limit information from the kitchen appliance (1) to the inductive power source, and receiving (104) user input via input means (5).

In a preferred embodiment, the method further comprises controlling provision of power to the food processing element (6) by means of a relay (7) controlled automatically by the control unit (4). Said controlling provision of power may comprise closing (105) the relay (7), and hence allowing operating (106) the food processing element (6) by the control unit (4), only when the control unit (4) detects that a predetermined condition is realized.

The predetermined condition comprises at least one of: establishing (102) a connection between the wireless communication module (3) and the communication unit of the inductive power source, sending (103) limit information of the kitchen appliance (1) to the inductive power source, and receiving (104) user input via input means (5) for operating the kitchen appliance (1), and specifically for operating the food processing element (6). In other words, the control unit (4) is configured to monitor the status of wireless connection, limit information transmittance, and receipt of user input from the input means and close the relay (7) immediately after it is determined that at least one of the steps (102, 103, 104) corresponding to aforementioned criteria has successfully been realized.

The method may further comprise checking (107), by the control unit (4), status of the wireless connection during operation of the food processing element (6), and opening (109) the relay (7) if it is detected that said wireless communication is interrupted or broken, for example during operation of the food processing element (6). Accordingly, if the kitchen appliance (1) is displaced such that the wireless communication and/or inductive coupling with the power source is adversely affected, the relay (7) is automatically opened.

Additionally or alternatively, the method may comprise checking (108), by the control unit (4), if a power off command is received via the input means (5), and opening (109) the relay (7) when a power off or a standby command is received, for example during operation of the food processing element (6).

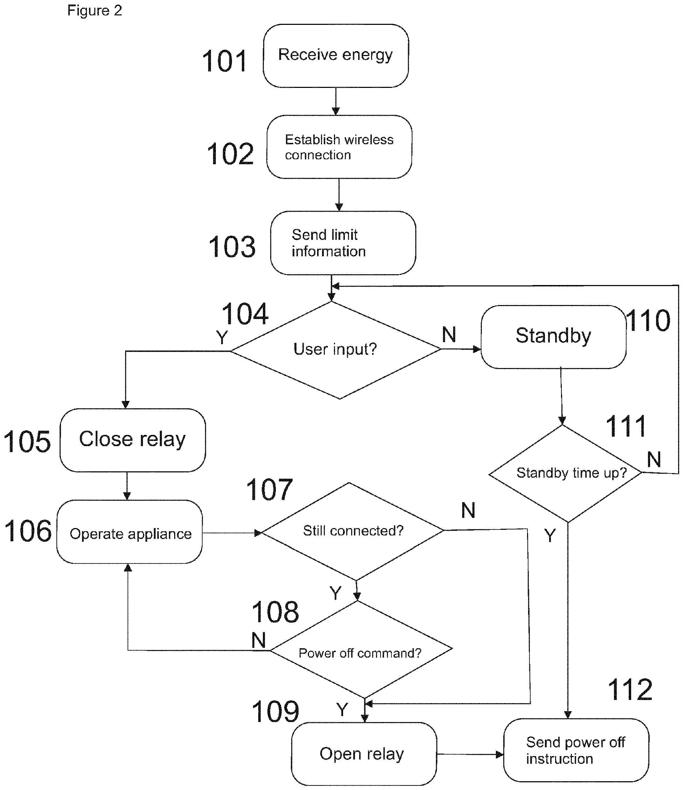

According to an embodiment of the invention the method comprises putting the kitchen appliance (1) in standby mode (110). The standby mode (110) can be activated either when no user input is received for a predetermined time after limit information is sent (103) to the power source, or when a user input for putting the appliance (1) in standby mode (110) is received. In both cases, a certain standby time is counted (111) by the control unit (4) and a power off instruction is sent (112) to the power source unless user input is received (104) within said time. (Figure 2)

With the inductively power kitchen appliance (1) and control method of the present invention, power input of the food processing element (6) of the kitchen appliance (1) can be automatically controlled separately from other electrical components of the kitchen appliance (1) in a simple and reliable manner. As a result, power is delivered to the food processing element (6) only under certain conditions such that the chance of involuntary operation of the food processing element (6) and possible safety risks associated therewith are obviated.

## Claims

1. An inductively powered kitchen appliance (1) **comprising** a secondary coil (2) for receiving electrical power from a primary coil of an inductive power source, a wireless communication module (3) for wirelessly communicating with a communication unit of the inductive power source, a control unit (4), input means (5) for receiving user input, a food processing element (6) operable by inductive power received from the power source for processing food placed in the kitchen appliance (1), and a relay (7) for controlling provision of operating power to the food processing element (6), wherein the control unit (4) is configured to control the relay (7), **characterized in that** the relay (7) is a normally open relay and the control unit (4) is further configured to close the relay (7) only when a predetermined condition is realized .

2. An inductively powered kitchen appliance (1) as in claim 1, wherein said predetermined condition comprises establishing a connection between the wireless communication module (3) and the communication unit of the inductive power source.

3. An inductively powered kitchen appliance (1) as in claim 1 or 2, wherein said predetermined condition comprises sending limit information of the kitchen appliance (1) to the inductive power source.

4. An inductively powered kitchen appliance (1) as in any one of the preceding claims, wherein said predetermined condition comprises receiving user input via input means (5) for operating the kitchen appliance (1).

5. An inductively powered kitchen appliance (1) as in any one of the preceding claims, wherein the control unit (4) is configured to, during operation of the food processing element (6), open the relay (7) when the control unit (4) detects that the connection between the wireless communication module (3) and the communication unit of the inductive power source is broken and/or a power off command is received via the input means (5).

6. An inductively powered kitchen appliance (1) as in any one of the preceding claims, wherein the food processing element (6) is a motorized element.

7. An inductively powered kitchen appliance (1) as in any one of claims 1 to 5, wherein the food processing element (6) is a resistive element.

8. A method of controlling an inductively powered kitchen appliance (1) according to any one of preceding claims, **comprising** receiving (101) energy from an inductive power source, establishing (102) wireless connection between a communication unit of the inductive power source and the wireless communication module (3), sending (103) via the wireless connection limit information from the kitchen appliance (1) to the inductive power source, receiving (104) user input via input means (5), **characterized in that** the method further comprises controlling provision of operating power to the food processing element (6) by means of a normally open relay (7) controlled by the control unit (4) and closing (105) the relay (7) only when the control unit (4) detects that a predetermined condition is realized.

9. A method of controlling an inductively powered kitchen appliance (1) as in claim 8, wherein said predetermined condition comprises at least one of: establishing (102) a connection between the wireless communication module (3) and the communication unit of the inductive power source, sending (103) limit information of the kitchen appliance (1) to the inductive power source, and receiving (104) user input via input means (5) for operating the kitchen appliance (1).

10. A method of controlling an inductively powered kitchen appliance (1) as in claim 8 or 9, wherein the method further comprises checking (107), during operation of the food processing element (6), status of the connection between the wireless communication module (3) and the communication unit of the inductive power source, and opening (109) the relay (7) if it is detected that said wireless communication is broken.

11. A method of controlling an inductively powered kitchen appliance (1) as in any one of claims 8 to 10, wherein the method further comprises checking (108), during operation of the food processing element (6), if a power off command is received via the input means (5), and opening (109) the relay (7) when a power off command is received.

## Patentansprüche

1. Ein induktiv betriebenes Küchengerät (1) **umfasst** eine Sekundärspule (2) zum Empfangen elektrischer Energie von einer Primärspule einer induktiven Energiequelle, ein drahtloses Kommunikationsmodul (3) zur drahtlosen Kommunikation mit einer Kommunikationseinheit der induktiven Stromquelle, eine Steuereinheit (4), Eingabemittel (5) zum Empfangen von Benutzereingaben, ein Lebensmittelverarbeitungselement (6), das durch induktive Energie betrieben werden kann, die von der Energiequelle empfangen wird, um im Küchengerät (1) platzierte Lebensmittel zu verarbeiten, und ein Relais (7) zum Steuern der Bereitstellung von Betriebsstrom für das Lebensmittelverarbeitungselement (6), wobei die Steuereinheit (4) dazu konfiguriert ist, das Relais (7) zu steuern, **gekennzeichnet ist es dadurch,** dass das Relais (7) ein normalerweise offenes Relais ist und die Steuereinheit (4) weiterhin so konfiguriert ist, dass sie das Relais (7) nur dann schließt, wenn eine vorgegebene Bedingung erfüllt ist.

2. Ein induktiv betriebenes Küchengerät (1), wie in Anspruch 1 aufgeführt, wobei die vorgegebene Bedingung das Herstellen einer Verbindung zwischen dem drahtlosen Kommunikationsmodul (3) und der Kommunikationseinheit der induktiven Stromquelle umfasst.

3. Ein induktiv betriebenes Küchengerät (1), wie in den Ansprüchen 1 oder 2 aufgeführt, wobei die vorgegebene Bedingung das Senden von Grenzwertinformationen des Küchengeräts (1) an die induktive Stromquelle umfasst.

4. Ein induktiv betriebenes Küchengerät (1), wie in einem der vorherigen Ansprüchen aufgeführt, wobei die vorgegebene Bedingung das Empfangen einer Benutzereingabe über Eingabemittel (5) zum Betreiben des Küchengeräts (1) umfasst.

5. Ein induktiv betriebenes Küchengerät (1), wie in einem der vorherigen Ansprüchen aufgeführt, wobei die Steuereinheit (4) so konfiguriert ist, dass sie während des Betriebs des Lebensmittelverarbeitungselements (6) das Relais (7) öffnet, wenn die Steuereinheit (4) erkennt, dass die Verbindung zwischen dem drahtlosen Kommunikationsmodul (3) und der Kommunikationseinheit der induktiven Stromquelle unterbrochen ist und/oder über das Eingabemittel (5) ein Ausschaltbefehl empfangen wird.

6. Ein induktiv betriebenes Küchengerät (1), wie in einem der vorherigen Ansprüchen aufgeführt, wobei das Lebensmittelverarbeitungselement (6) ein motorisiertes Element ist.

7. Ein induktiv betriebenes Küchengerät (1), wie in den Ansprüchen 1 bis 5 aufgeführt, wobei das Lebensmittelverarbeitungselement (6) ein Widerstandselement ist.

8. Ein Steuerverfahren eines induktiv angetriebenen Küchengeräts (1) nach einem der vorhergehenden Ansprüche, umfasst das Empfangen (101) von Energie von einer induktiven Stromquelle, Herstellen (102) einer drahtlosen Verbindung zwischen einer Kommunikationseinheit der induktiven Stromquelle und dem drahtlosen Kommunikationsmodul (3), Senden (103) über die drahtlose Verbindung Grenzwertinformationen vom Küchengerät (1) an die induktive Stromquelle, Empfangen (104) von Benutzereingaben über Eingabemittel (5), gekennzeichnet ist es dadurch, dass das Verfahren weiterhin das Steuern der Bereitstellung von Betriebsstrom für das Lebensmittelverarbeitungselement (6) mittels eines normalerweise offenen Relais (7), das von der Steuereinheit (4) gesteuert wird, und das Schließen (105) des Relais (7) nur dann umfasst, wenn er der Fall ist, dass die Steuereinheit (4) erkennt, dass eine vorgegebene Bedingung erfüllt ist.

9. Ein Steuerverfahren eines induktiv angetriebenen Küchengeräts (1) nach Anspruch 8, wobei die vorgegebene Bedingung mindestens eines von Folgendem umfasst: Herstellen (102) einer Verbindung zwischen dem drahtlosen Kommunikationsmodul (3) und der Kommunikationseinheit der induktiven Stromquelle, Senden (103) von Grenzwertinformationen des Küchengeräts (1) an die induktive Stromquelle und Empfangen (104) von Benutzereingaben über Eingabemittel (5) zum Betreiben des Küchengeräts (1).

10. Ein Steuerverfahren eines induktiv angetriebenen Küchengeräts (1) nach Anspruch 8 oder 9, wobei das Verfahren während des Betriebs des Lebensmittelverarbeitungselements (6) außerdem das Überprüfen (107) des Status der Verbindung zwischen dem drahtlosen Kommunikationsmodul (3) und der Kommunikationseinheit der induktiven Stromquelle und das Öffnen (109) des Relais (7) umfasst, wenn festgestellt wird, dass die drahtlose Kommunikation unterbrochen ist.

11. Ein Steuerverfahren eines induktiv angetriebenen Küchengeräts (1) nach den Ansprüchen 8 bis 10, wobei das Verfahren weiterhin das Überprüfen (108) während des Betriebs des Lebensmittelverarbeitungselements (6) umfasst, wenn über das Eingabemittel (5) ein Ausschaltbefehl empfangen wird, und Öffnen (109) des Relais (7), wenn ein Ausschaltbefehl empfangen wird.

## Revendications

1. Un appareil de cuisine alimenté par induction (1) **comprenant** une bobine secondaire (2) pour recevoir l'énergie électrique d'une bobine primaire d'une source d'énergie inductive, un module de communication sans fil (3) pour communiquer sans fil avec une unité de communication de la source d'énergie inductive, une unité de commande (4), un moyen d'entrée (5) pour recevoir les données de l'utilisateur, un élément de traitement des aliments (6) pouvant fonctionner par l'énergie inductive reçue de la source d'énergie pour traiter les aliments placés dans l'appareil de cuisine (1), et un relais (7) pour contrôler l'alimentation de l'élément de traitement des aliments (6), l'unité de commande (4) étant configurée pour contrôler le relais (7), **caractérisé par le fait que** le relais (7) est un relais normalement ouvert et que l'unité de commande (4) est en outre configurée pour fermer le relais (7) uniquement lorsqu'une condition prédéterminée est remplie.

2. Un appareil de cuisine alimenté par induction (1) tel que dans la déclaration 1, dans lequel ladite condition prédéterminée comprend l'établissement d'une connexion entre le module de communication sans fil (3) et l'unité de communication de la source d'énergie inductive.

3. Un appareil de cuisine alimenté par induction (1) comme dans la déclaration 1 ou 2, dans lequel ladite condition prédéterminée comprend l'envoi d'informations de limite de l'appareil de cuisine (1) à la source d'énergie inductive.

4. Un appareil de cuisine alimenté par induction (1) selon l'une quelconque des déclarations précédentes, dans lequel ladite condition prédéterminée comprend la réception d'une entrée de l'utilisateur via les moyens d'entrée (5) pour faire fonctionner l'appareil de cuisine (1).

5. Un appareil de cuisine alimenté par induction (1) selon l'une quelconque des déclarations précédentes, dans lequel l'unité de commande (4) est configurée pour, pendant le fonctionnement de l'élément de traitement des aliments (6), ouvrir le relais (7) lorsque l'unité de commande (4) détecte que la connexion entre le module de communication sans fil (3) et l'unité de communication de la source d'alimentation inductive est rompue et/ou qu'une commande de mise hors tension est reçue par l'intermédiaire du moyen d'entrée (5).

6. Un appareil de cuisine alimenté par induction (1) selon l'une quelconque des déclarations précédentes, dans lequel l'élément de traitement des aliments (6) est un élément motorisé.

7. Un appareil de cuisine alimenté par induction (1) selon l'une quelconque des déclarations 1 à 5, dans lequel l'élément de traitement des aliments (6) est un élément résistif.

8. Une méthode de contrôle d'un appareil de cuisine alimenté par induction (1) selon l'une quelconque des déclarations précédentes, **comprenant** la réception (101) d'énergie provenant d'une source d'énergie inductive, l'établissement (102) d'une connexion sans fil entre une unité de communication de la source d'énergie inductive et le module de communication sans fil (3), l'envoi (103) via la connexion sans fil d'informations de limite de l'appareil de cuisine (1) à la source d'énergie inductive, recevoir (104) les données de l'utilisateur par l'intermédiaire des moyens d'entrée (5), **caractérisé en ce que** le procédé comprend en outre le contrôle de la fourniture de l'énergie de fonctionnement à l'élément de transformation alimentaire (6) au moyen d'un relais normalement ouvert (7) contrôlé par l'unité de commande (4), et la fermeture (105) du relais (7) uniquement lorsque l'unité de commande (4) détecte qu'une condition prédéterminée est remplie.

9. Une méthode de contrôle d'un appareil de cuisine alimenté par induction (1) comme dans la déclaration 8, dans laquelle ladite condition prédéterminée comprend au moins l'un des éléments suivants : l'établissement (102) d'une connexion entre le module de communication sans fil (3) et l'unité de communication de la source d'énergie inductive, l'envoi (103) d'informations de limite de l'appareil de cuisine (1) à la source d'énergie inductive, et la réception (104) de l'entrée de l'utilisateur via les moyens d'entrée (5) pour le fonctionnement de l'appareil de cuisine (1).

10. Une méthode de contrôle d'un appareil de cuisine alimenté par induction (1) selon la revendication 8 ou 9, dans lequel le procédé comprend en outre la vérification (107), pendant le fonctionnement de l'élément de traitement des aliments (6), de l'état de la connexion entre le module de communication sans fil (3) et l'unité de communication de la source d'alimentation inductive, et l'ouverture (109) du relais (7) s'il est détecté que ladite communication sans fil est rompue.

11. Une méthode de contrôle d'un appareil de cuisine alimenté par induction (1) selon l'une quelconque des déclarations 8 à 10, dans lequel le procédé consiste en outre à vérifier (108), pendant le fonctionnement de l'élément de traitement des aliments (6), si une commande de mise hors tension est reçue par l'intermédiaire du moyen d'entrée (5), et à ouvrir (109) le relais (7) lorsqu'une commande de mise hors tension est reçue.
